# FASCICULE DE BREVET EUROPEEN

(11) **EP 2 334 436 B1**
(45) Date de publication et mention de la délivrance du brevet: **22.07.2015**
(21) Numéro de dépôt: 09748370.5
(22) Date de dépôt: 29.09.2009
(51) Int. Cl.: B03B 5/28, B03B 5/30, B03B 5/44

(54) **PROCÉDÉ DE SÉPARATION SÉLECTIVE ET SIMULTANÉMENT D'AUGMENTATION DE PURETÉ DE MATÉRIAUX ORGANIQUES USAGÉS FRAGMENTÉS, AU MOYEN DE MILIEUX AQUEUX DE DENSITÉS CHOISIES**
VERFAHREN ZUR SELEKTIVEN TRENNUNG UND ZUR GLEICHZEITIGEN ERHÖHUNG DER REINHEIT VON VERBRAUCHTEN, FRAGMENTIERTEN, ORGANISCHEN MATERIALIEN MITTELS WÄSSRIGER MEDIEN MIT AUSGEWÄHLTEN DICHTEN
PROCESS FOR THE SELECTIVE SEPARATION, AND FOR THE SIMULTANEOUS INCREASE IN PURITY, OF SPENT, FRAGMENTED, ORGANIC MATERIALS BY MEANS OF AQUEOUS MEDIA HAVING CHOSEN DENSITIES

(30) Priorité: 30.09.2008 FR 0805389
(43) Date de publication de la demande: 22.06.2011
(73) Titulaire: Galloo Plastics, 59250 Halluin (FR)
(72) Inventeur: SEINERA, Henri, F-69600 Oullins (FR); DE FERAUDY, Hugues, F-69220 Charantay (FR)
(74) Mandataire: Fidal Innovation
(86) Numéro de dépôt international: PCT/FR2009/001154
(87) Numéro de publication internationale: WO 2010/037927

(56) Documents cités:
- WO-A-94/21382
- DE-A1- 4 329 270
- LU-A1- 88 506
- US-A1- 2003 027 877
- US-A1- 2008 190 819

## Description

### Domaine de l'invention

L'invention concerne un procédé de séparation sélective et simultanément d'augmentation de pureté d'au moins deux matériaux organiques de synthèse hétérogènes, en mélange, tels que des polymères et/ou des copolymères chargés ou non, accompagnés ou non de matériaux contaminant à éliminer, pour les extraire du mélange et les séparer en matériaux homogènes, décontaminés et recueillir ces matériaux homogènes et recyclables de pureté d'au moins 99%, par un moyen propre à la plasturgie.

Ces polymères et/ou copolymères, chargés ou non, sont des déchets, en particulier usagés, à recycler pour les valoriser, ces matériaux organiques de synthèse étant issus d'abord de la destruction par broyage d'automobiles et de biens de consommation durables parvenus en fin de vie, puis de leur séparation d'avec les matériaux métalliques recyclables, ensuite de leur séparation d'avec la majeur partie de matériaux contaminants et d'une première séparation de ces matériaux dans un milieu aqueux à une densité égale à 1, choisie comme seuil de séparation, en au moins deux flux :
- l'un des flux ayant une densité séparative inférieure à 1, obtenue par la phase aqueuse de densité 1, pouvant contenir en solution une quantité adéquate d'alcool, pour abaisser cette densité en dessous de 1 ;
- l'autre flux ayant une densité séparative supérieure ou égale à 1, obtenue par la phase aqueuse pouvant contenir en solution et/ou en suspension stabilisée des matériaux minéraux solubles ou des particules minérales pulvérulentes insolubles dispersées dans la phase aqueuse, pour augmenter cette densité au dessus de 1, ces variations de densité du milieu aqueux provoquant la séparation sélective d'un matériau organique déterminé à partir du mélange des matériaux usagés séparés en deux flux.

L'invention concerne plus particulièrement un procédé de séparation et simultanément d'augmentation de pureté d'au moins deux matériaux organiques hétérogènes en mélange, issus de l'un ou l'autre flux, de densité séparative égale à 1, accompagnés ou non de matériaux contaminants et à les séparer de manière homogène, tout en éliminant les matériaux contaminants pouvant les accompagner. L'invention concerne enfin, l'utilisation du procédé de séparation d'au moins deux matériaux organiques de synthèse en mélange, de densité même très proche, pour les valoriser par recyclage.

### Etat de la technique : Problème observé

L'industrie du recyclage s'intéresse de plus en plus à la récupération sélective et au recyclage des matériaux organiques de synthèse usagés.

Ces matériaux organiques de synthèse usagés proviennent généralement de résidus de broyage automobile et de biens de consommation durables arrivés en fin de vie, dans lesquels une multiplicité de types de matériaux organiques de synthèse, que sont les polymères et/ou des copolymères chargés ou non, ignifugés ou non, adjuvantés ou non, sont à considérer comme valorisables dès lors qu'ils sont séparés d'une multiplicité d'autres matériaux considérés comme des contaminants gênants tels que des métaux, des minéraux, du bois et autres contaminants divers, comme des déchets industriels, des déchets d'emballage de diverses provenances et autres. Dans les industries de recyclage de matériaux organiques de synthèse usagés à valoriser, sont pratiqués divers procédés de séparation des constituants des flux, plus ou moins polluants et plus ou moins pollués, plus ou moins concentrés en matériaux organiques de synthèse valorisables qu'il faut séparer des polluants, concentrer et trier par flux homogènes de types de matériaux organiques de synthèse présents, tels que par exemple polyéthylène, polypropylène, polystyrène, (PS), copolymère acrylonitrile-butadiène-styrène, (ABS), polyamides (PA), chlorure de polyvinyle (PVC), polyesters, polyuréthane, polycarbonate, copolymères acryliques ou méthacryliques ou autres, tous les polymères pouvant être chargés, adjuvantés, ignifugés ou non.

Ces procédés connus permettent actuellement d'extraire et de séparer des flux à traiter, constitués de mélanges de matériaux organiques de synthèse à valoriser et de matériaux contaminants à éliminer, ces flux comprenant :
✔ une phase de matériaux organiques de synthèse de densité inférieure à 1,
✔ une phase de matériaux organiques de synthèse de densité supérieure ou égale à 1,
✔ une phase de matériaux organiques de synthèse, formée par exemple de mousses de polyéthylène, de polyuréthane, de déchets de films, de fils ou autres,
✔ une phase de matériaux contaminants à éliminer dont les constituants ne sont pas valorisables dans de tels procédés de séparation et de valorisation, par exemple du sable, des débris de verre, des débris de bois, des restes de métaux ou autres.

L'un de ces procédés de séparation de matériaux polymères de tous types provenant de broyage de véhicules automobiles et/ou d'autres objets en fin de vie (brevet européen EP 0918606 B), consiste, après une étape de broyage assurant la fragmentation des matériaux organiques de synthèse, préférentiellement à effectuer une séparation mécanique par facteur de forme, suivie d'une première étape de séparation par densité qui provoque la séparation de tous les matériaux organiques de synthèse à valoriser en deux flux:
✔ l'un de densité inférieure à 1, comprenant notamment et par exemple les polyoléfines non chargées, telles que les polyéthylènes (d=0,92 à 0,95), les polypropylènes (d autour de 0,9), les copolymères d'éthylène et de propylène, les copolymères d'éthylène et de vinylacétate, les copolymères d'éthylène-propylène caoutchouc (E.P.R.), les copolymères d'éthylène-propylène-diène-monomère (E.P.D.M.), les mousses de polyéthylène (PE), de polypropylène (PP), de polyuréthane (PU) ou autres,
✔ l'autre, de densité supérieure ou égale à 1, comprenant notamment et par exemple :
   - du Polystyrène : PS non chargé (d autour de 1,05)
   - des copolymères acrylonitrlle-butadlène-styrène : ABS non chargé (d environ 1,07)
   - des chlorures de polyvinyle : PVC rigide non chargé (d autour de 1,30 à 1,40) et chargé (d autour de 1,40 à 1,55), plastifiés tels que plastisol et mousses de PVC
   - des polycarbonates : PC non chargé, de densité d=1,20 à 1,24,PC chargé à 20% de fibres de verre de densité d=1,3 ou encore PC chargé à 30% de fibres de verre de densité d=1,44
   - des caoutchoucs thermoplastiques, sauf les caoutchoucs alvéolaires thermodurcissables
   - des polyuréthanes : PU chargés (d=1,21 environ)
   - des polypropylènes chargés Talc (PP Talc chargé entre 5% et 40% en talc)
   - des polyéthylènes chargés : (PE chargés entre 2% et 40% de charges
   - des polyesters insaturés (d allant de environ 1,10 à 1,13)
   - des polyesters saturés (d ≥ 1,20), chargés ou non (souvent chargés en fibres de verre)
   - des polyamides : PA₆ (d=1,13), PA_{6,6} (d=1,14), PA_{6.10} (d=1,08), PA₁₁ (d=1,04), PA₁₂ (d=1,02), chargés ou non chargés
   - des poly méthacrylates de méthyle : PMMA (d=1,18)
   - autres.

Ces deux flux sont ultérieurement traités pour en extraire chaque composant, les séparer selon des flux homogènes et les traiter pour en faire des granulés formulés, directement utilisables selon les procédés de la plasturgle.

Toutefois, le traitement de ces deux flux pour en extraire chaque matériau organique de synthèse usagé à valoriser, selon des flux homogènes pour en faire ultérieurement des granulés formulés, ne permet pas, une sélection fine et homogène des divers composés polymères présents en mélange dans un flux de matériaux organiques de synthèse à traiter ; et en d'autres termes, d'augmenter la pureté des composés polymères extraits et séparés.

Dans le cas du flux du mélange de matériaux organiques de synthèse valorisables de densité inférieure à 1, ce flux est traité par une succession d'étapes de séparation en milieu aqueux par des bains de densité adaptée selon des densités croissantes de bains à bains successifs, permettant une sélection dite homogène des divers composés polymères présents dans ledit flux, mais dont la pureté après sélection est insuffisante.

Dans le cas du flux du mélange des matériaux organiques de densité supérieure ou égale à 1, les divers matériaux organiques de synthèse s'avèrent manifester des difficultés lors de la séparation dans des bains dont la densité est croissante régulièrement de bains à bains, densité qui est sensée être adaptée à cette séparation et être stable dans le temps, c'est-à-dire restant constante dans chaque bain.

Pour ce deuxième flux qui se compose d'un mélange de polymère, et/ou copolymères chargés ou non, dont les densités s'étalent de 1 à environ 1,6, la séparation des divers matériaux organiques de synthèse présents dans le mélange s'effectue par densité croissante dans des séparateurs hydrauliques successifs, le milieu aqueux de séparation dans chaque séparateur étant formé d'eau, de composés minéraux solubles tels que des sels minéraux et/ou de composés minéraux tels que des argiles et en particulier de la bentonite, tous ces composés étant mis en oeuvre pour augmenter la densité de la phase liquide et la porter à une valeur de densité permettant une séparation des divers matériaux organiques de synthèse en deux phases distinctes, l'une surnageant et l'autre décantant dans le fond du séparateur, chaque phase de décantation formant un nouveau flux soumis à son tour à une nouvelle séparation par densité en deux phases distinctes l'une surnageant et l'autre décantant dans le fond du séparateur.

Ainsi, il apparaît dans l'état de la technique que pour séparer, par différence de densité, des matériaux polymères usagés, en mélange, au moyen d'une succession de séparateurs hydrauliques selon deux phases, l'une surnageante et l'autre décantante, la densité du milieu hydraulique dans chaque séparateur est rendue régulièrement croissante d'un séparateur à l'autre, et ce, de proche en proche, jusqu'à l'achèvement de la séparation de chaque type de matériaux polymères usagés initialement présents.

Un tel procédé de séparation de matériaux polymères usagés en mélange comprenant des Acrylonitrile-Butadiène-Styrène (ABS), polycarbonate (PC), alliages ABS/PC, polystyrène (PS) et des polyoléfines (PE, PP) résultant du broyage de biens de consommation durables en fin de vie, est décrit dans la demande de brevet US 2003/0027877 et consiste, après deux étapes de granulation par broyage (6 mm, puis 2 mm) à effectuer une séparation par densité d'ABS et PC en mélange, en hydroséparation selon 4 étapes de séparation successives en milieu aqueux de densité croissante :
▪ le milieu aqueux de la première étape de séparation ayant une densité de 1,04 permettant l'élimination de la fraction surnageante formée des polyoléfines, de polystyrène et d'un peu d'ABS et la récupération de la fraction décantante traitée dans la deuxième étape de séparation,
▪ le milieu aqueux de la deuxième étape de séparation ayant une densité de 1,090 qui permet la récupération de la fraction surnageante constitue du premier produit récupérable fait de ABS et PC et d'une fraction décantante traitée dans la troisième étape de séparation,
▪ le milieu aqueux de la troisième étape de séparation ayant une densité de 1,160 dans lequel la fraction surnageante est éliminée et la fraction décantante envoyée dans la quatrième étape de séparation pour y être traitée,
▪ le milieu aqueux de la quatrième étape de séparation ayant une densité de 1,203 dans lequel la fraction surnageante formée du deuxième produit récupérable fait de ABS et PC est récupéré et la fraction décantante est répétée.

Toutefois, il se révèle à l'usage, en particulier dans des installations de séparation par densité en service dans des ensembles industriels de traitement de matériaux organiques de synthèse usagés à valoriser,
* que les milieux aqueux de séparation ne sont pas suffisamment stables dans le temps pour permettre des séparations suffisamment sélectives et homogènes par densité, c'est-à-dire procurant des séparations franches en types de matériaux triés, ces milieux aqueux de séparation pouvant évoluer par contamination. Dès lors, les flux provenant de la séparation peuvent être des mélanges de plusieurs matériaux dont les densités respectives peuvent être proches les unes des autres.
* et que des matériaux triés ne parviennent pas à des puretés dépassant 96%, voire 98%.

Il a été en effet observé divers phénomènes particulièrement gênants se développant au sein de ces milieux liquides de séparation par densité ; ces phénomènes gênants, qui sont de réels inconvénients, pouvant être :
✔ une grande difficulté à obtenir des matériaux polymères, séparés les uns des autres, de pureté élevée,
✔ une évolution de la rhéologie desdits milieux liquides qui se manifeste par une variation perturbante de leur viscosité vers un état plus fluide ou plus pâteux,
✔ une dérive ou une variation de la densité apparente des milieux liquides, la densité ne pouvant rester stable au niveau seuil initialement choisi pour une bonne séparation des matériaux organiques de synthèse usagés à valoriser, cette dérive (variation) provoquant une évolution de la composition des flux séparés par un milieu liquide dense,
✔ une décantation dans le temps d'une partie des composés minéraux dispersés dans le milieu aqueux pour créer la densité choisie, en partie à l'origine de l'évolution de la densité du milieu liquide de séparation.

Il existe dès lors un problème certain et important quant à la séparation par densité de matériaux organiques de synthèse usagés à valoriser tels que sont des polymères et/ou copolymères chargés ou non qui sont des déchets usagés à recycler, issus de la destruction par broyage d'automobiles et de biens de consommation durables parvenus en fin de vie, pour obtenir des flux sélectionnés homogènes en matériaux séparés, sans qu'il y ait, ni dérive de la densité, ni mélange de matériaux sélectionnés, ni mélange d'un matériau sélectionné avec des contaminants, et obtenir des flux de matériaux organiques de synthèse séparés d'une plus grande pureté.

### Exposé sommaire de l'invention

Le procédé de séparation sélective par densité et simultanément d'augmentation de pureté selon l'invention de matériaux organiques de synthèse usagés à recycler pour les valoriser, de densité inférieure à 1 ou au moins égale à 1, issus de la destruction par broyage de bien durables parvenus en fin de vie, tels que des véhicules automobiles, le matériel électroménager, le matériel électronique, permet l'élimination des inconvénients décelés dans l'état de la technique et l'apport, simultanément, de substantielles améliorations par rapport aux moyens antérieurement décrits.

Selon l'invention, le procédé de séparation sélective et simultanément d'augmentation de pureté de deux matériaux organiques de synthèse, usagés, fragmentés, de densité distincte, en mélange entre eux et en mélange avec des matériaux contaminants divers à éliminer de densité inférieure ou supérieure à 1, au moyen de milieux aqueux denses, dont chaque milieu aqueux a une densité choisie « ds. » comme seuil de séparation desdits matériaux organiques et contaminants en deux flux, l'un surnageant et l'autre décantant, se caractérise en ce qu'il comporte :
a) Une étape de séparation à densité forte ds(a) du mélange en deux flux, l'un surnageant (a1) et l'autre décantant (a2) au moyen d'un milieu aqueux dont la densité ds(a) est choisie intermédiaire aux densités de l'un et de l'autre matériaux organiques de synthèse à séparer, préférentiellement proche de la densité du matériau organique à séparer ayant la plus faible densité pour en assurer une complète flottation,
b) Une étape de séparation à densité faible ds(b) des composés du flux surnageant (a1) au moyen d'un milieu aqueux dont la densité ds(b) est choisie inférieure à ds(a) pour éliminer un flux surnageant (b1) formé de contaminants et recueillir un flux décantant (b2) formé des fragments du premier matériau organique de synthèse usagé à recycler,
c) Une étape de séparation à densité élevée ds(c) qui est supérieure à ds(a) des composés du flux décantant (a2) au moyen d'un milieu aqueux dont la densité ds(c) est choisie au moins égale à la densité du matériau organique de synthèse présent dans ledit flux (a2), le flux surnageant (c1) étant formé du mélange des fragments du matériau organique de synthèse de densité ds(c) et de matériaux contaminants de densités comprises entre ds(a) et ds(c), et le flux décantant (a2) étant formé des matériaux contaminants de densité inférieure à ds(c) qui est éliminé,
d) Une étape de séparation à densité faible ds(d) du flux surnageant (c1) au moyen d'un milieu aqueux dont la densité ds(d) est choisie inférieure à ds(c), dont le flux surnageant (d1), est formé des matériaux contaminants de densités comprises entre ds(a) et ds(c), et est éliminé, et dont le flux décantant (d2) formé des fragments du matériau organique de synthèse usagé, homogène, de densité ds(d) est recueilli pour être valorisé.

### Description détaillée de l'invention

Ainsi, et alors que les procédés décrits dans l'état de la technique pratiquent des séparations de matériaux organiques de synthèse usagés en mélange, par différence de densité, selon deux phases, l'une surnageante et l'autre décantante, au moyen d'une succession de séparateurs hydrauliques dont la densité du milieu aqueux de séparation est rendue régulièrement et systématiquement croissante de séparateur en séparateur successifs jusqu'à la phase finale, le procédé selon l'invention pratique une alternance de densités dans les séparateurs successifs, c'est-à-dire qu'un séparateur à densité élevée est suivi d' un séparateur à densité faible, lui-même suivi d'un séparateur à densité élevée, de telle sorte qu'une phase flottante dans un séparateur à densité élevée devient une phase décantante dans le séparateur suivant et ceci, de proche en proche.

Dans le procédé selon l'invention,
- l'étape de séparation (a) du mélange des deux matériaux organiques de synthèse usagés et des contaminants les accompagnant consiste à séparer ce mélange en deux flux au moyen d'un milieu aqueux dont la densité « dsa », de séparation, est intermédiaire aux densités de l'un et de l'autre des deux matériaux organiques de synthèse à séparer et choisie pour permettre la flottation du matériau organique ayant la plus faible densité :
   a1) le flux surnageant étant formé des fragments du matériau organique de synthèse homogène et des matériaux contaminants, de densité au plus égale à « dsa »,
   a2) le flux décantant étant formé des fragments du matériau organique de synthèse homogène et des matériaux contaminants de densité supérieur à « dsa » ;
- l'étape de séparation (b) du mélange des deux matériaux organiques de synthèse usagés et des contaminants les accompagnant, consiste à séparer les composés du flux surnageant (a1) en le traitant au moyen d'un milieu aqueux ayant une densité « dsb » inférieure à « dsa », dont le surnageant (b1), formé des contaminants de densité inférieure à « dsb », est éliminé, et dont le décantant (b2) formé des fragments du matériau organique de synthèse homogène de densité « dsb » à valoriser est recueilli pour être recyclé et valorisé ;
- l'étape de séparation (c) du mélange des deux matériaux organiques de synthèse usagés et des contaminants les accompagnant, consiste à traiter le flux décantant (a2) en le séparant au moyen d'un milieu aqueux ayant une densité « dsc » supérieure à la densité « dsa » mais au moins égale à la densité du matériau organique de synthèse présent dans ledit flux décantant (a2), dont le surnageant (c1) formé du mélange des fragments du matériau organique de synthèse de densité « dsc » et des matériaux contaminants de densités comprises entre « dsa » et « dsc », est recueilli et dont le décantant (c2) formé de matériaux contaminants de densité supérieure à « dsc », est éliminé.
- l'étape de séparation (d) du flux surnageant (c1) formé du mélange des deux matériaux organiques de synthèse usagés et des contaminants les accompagnant, consiste à traiter ce flux surnageant en le séparant au moyen d'un milieu aqueux ayant une densité « dsd » Inférieure à la densité « dsc » dont le surnageant (d1) formé des matériaux contaminants de densités comprises entre « dsa » et « dsc », est éliminé et dont le décantant (d2) formé des fragments du matériau organique de synthèse homogène de densité « dsd », est recueilli pour être recyclé et valorisé.

Le procédé de séparation sélective selon l'invention de mélange de matériaux organiques de synthèse usagés, fragmentés à valoriser par recyclage s'applique à tous les matériaux polymères et/ou copolymères, chargés ou non, que l'on cherche à valoriser, qu'ils soient d'origine thermoplastique et/ou thermodure.

Le mélange de matériaux organiques de synthèse usagés, fragmentés à valoriser par recyclage et à séparer au moyen du procédé de séparation selon l'invention, est issu, dans la majorité des cas, de procédés de valorisation des matériaux organiques de synthèse usagés provenant de tous types de déchets dont, en particulier, de résidus de broyage automobile, de biens de consommation durable arrivés en fin de vie ou autres déchets desquels une multiplicité de types de matériaux organiques de synthèse usagés et valorisables, que sont les polymères et/ou copolymères chargés ou non, ignifugés ou non, adjuvantés ou non, a été extraite par séparation au moins partielle d'avec d'autres matériaux considérés connus contaminants tels que du bois, des minéraux, des métaux, du verre, du caoutchouc, des mousses polyoléfiniques ou polyuréthane, des fils, des tissues, des déchets de films et autres...

Les matériaux organiques de synthèse usagés, fragmentés, en mélange, à séparer au moins deux à deux et à débarrasser du reste des matériaux contaminants par le procédé de séparation selon l'invention sont, dès lors, dans un état de propreté et de siccité tels qu'ils ne peuvent faire évoluer de façon significative, la densité « ds. » du milieu aqueux de séparation choisie comme seuil de séparation.

Le milieu aqueux de séparation, à densité « ds. » choisie comme seuil de séparation, mis en oeuvre dans le procédé de séparation selon l'invention, est choisi de telle sorte qu'il peut séparer des matériaux organiques de synthèse provenant aussi bien d'un flux de matériaux organiques de synthèse en mélange, usagés, à valoriser dont chaque type de matériaux a une densité inférieure à 1, que d'un flux de matériaux organiques de synthèse en mélange, usagés à valoriser dont chaque type de matériaux a une densité supérieure ou égale à 1.

Quand le flux de matériaux organiques de synthèse à valoriser a une densité inférieure à 1, le milieu aqueux de séparation est constitué d'eau et d'au moins un agent organique soluble dans l'eau ayant une densité inférieure à 1, comme par exemple un alcool mono ou polyhydroxylé, tels que pour les plus simples, le méthanol, l'éthanol, le propanol, le butanol, l'isobutanol, glycol.... la quantité de cet agent étant contrôlée pour atteindre la valeur choisie comme seuil de séparation pour la densité « ds. ».

Quand le flux de matériaux organiques de synthèse à valoriser a une densité supérieure ou égale à 1, le milieu aqueux de séparation est formé d'eau pour un seuil « dsa » de séparation choisi exactement égal à 1, est constituée d'eau et de composés minéraux solubles dans l'eau tels que des sels minéraux et/ou de composés minéraux insolubles ou faiblement solubles dans l'eau de très faible dimension granulométrique tels que des argiles, du carbonate de calcium, mis en suspension dans l'eau, en quantité contrôlée pour atteindre la valeur choisie comme seuil de séparation pour la densité « ds. ».

Une fois que les matériaux organiques de synthèse usagés, fragmentés, sont séparés en deux flux de matériaux organiques de synthèse homogènes et débarrassés des matériaux contaminants les accompagnant, ils peuvent être extrudés sous la forme de granulés de polymères adjuvantés ou non quand lesdits fragments sont thermoplastiques, ces granulés de recyclage étant introduits dans les circuits d'exploitation industrielle pour être utilisés dans la réalisation de pièces pour les domaines de l'automobile, de l'électroménager, de l'électronique ou autres selon les techniques de la plasturgie.

Le procédé de séparation par densité selon l'invention s'applique à la séparation sélective de au moins deux matériaux organiques de synthèse en mélange et à l'élimination des matériaux contaminant les accompagnant, les matériaux étant des polymères et/ou copolymères chargés ou non qui peuvent être des déchets usagés à recycler, en particulier ceux issus de la destruction par broyage d'automobiles et de biens de consommation durables parvenus en fin de vie.

Par le procédé selon l'invention les deux matériaux organiques de synthèse initialement en mélange puis séparés peuvent atteindre l'un et l'autre un niveau de pureté de 99%.

### Exemple

L'invention sera mieux comprise grâce à l'illustration qui en est faite sous la forme d'exemple et qui concerne la séparation par densité en milieu aqueux d'un mélange de polyéthylène et de polypropylène fragmentés et de matériaux contaminants à éliminer, ce mélange provenant de la destruction par broyage de véhicules en fin de vie.

On traite selon le procédé de l'invention 2 tonnes de matière se composant de la manière suivante:
▪ 1,204 t d'un mélange de polypropylène et de polypropylène chargé de talc à 3% de densité 0,920 soit 60,2 % du total
▪ 0,684 t de polyéthylène soit 34,2 % du total
▪ 0,056 t de contaminant C1 soit 2,8 % du total (densité < à celle du polypropylène)
▪ 0,036 t de contaminant C2 soit 1,8 % du total (densité > polypropylène et < polyéthylène)
▪ 0,020 t de contaminant C3 soit 1,0 % du total (densité > polyéthylène). Soit un total de 2 tonnes

La nature de chaque contaminant C1, C2, C3 est la suivante :
▪ C1 est constitué par des mousses (polyuréthane, polypropylène, polyéthylène,...), du bois, des plastiques alvéolés ou expansés, et autres.
▪ C2 est constitué par du polypropylène légèrement chargé (talc ou autres)
▪ C3 est constitué par des silicones, du polystyrène, de l'ABS et autres.

Les densités choisies pour les tris en milieu aqueux sont les suivantes :
- Pour l'étape de séparation (a) la densité du milieu aqueux de séparation est choisie dans la gamme 0,925 à 0,930 :
   Le polypropylène flotte avec C1. Le polyéthylène décante avec C2 et C3;
- Pour l'étape de séparation (b) la densité du milieu aqueux de séparation est choisie dans la gamme 0,850 à 0, 890 :
   Le polypropylène décante et est récupéré. C1 surnage et est éliminé;
- Pour l'étape de séparation (c) la densité du milieu aqueux de séparation est choisie dans la gamme 0,940 à 0, 950 :
   Le polyéthylène surnage avec C2. C3 décante ;
- Pour l'étape de séparation (d) la densité du milieu aqueux de séparation est choisie dans la gamme 0,910 à 0,920 :
   Le polyéthylène décante et est récupéré. C2 surnage et est éliminé.

Les polypropylènes et polyéthylènes récupérés sont homogènes et ont un très bon niveau de pureté qui permet leur recyclage dans tous les domaines industriels et en particulier de celui de l'automobile.

Les contaminants C1, C2, C3 peuvent être ultérieurement traités en vue de récupérer des polymères tels que le polystyrène, ABS, PS et autres.

## Revendications

1. Procédé de séparation sélective et simultanément d'augmentation de pureté de deux matériaux organiques de synthèse, usagés, fragmentés, de densités distinctes, en mélange entre eux et en mélange avec des matériaux contaminants divers à éliminer, de densité inférieure ou supérieure à 1, au moyen de milieux aqueux denses, dont chaque milieu aqueux a une densité choisie « ds. » comme seuil de séparation desdits matériaux organiques et contaminants, ladite séparation conduisant à deux flux, l'un surnageant et l'autre décantant, ledit procédé étant **caractérisé en ce qu'**il comporte :
a) Une étape de séparation à densité forte ds(a) du mélange en deux flux, l'un surnageant (a1) et l'autre décantant (a2) au moyen d'un milieu aqueux dont la densité ds(a) est choisie intermédiaire aux densités de l'un et de l'autre matériaux organiques de synthèse à séparer, préférentiellement proche de la densité du matériau organique à séparer ayant la plus faible densité pour en assurer une complète flottation,
b) Une étape de séparation à densité faible ds(b) des composés du flux surnageant (a1) au moyen d'un milieu aqueux dont la densité ds(b) est choisie inférieure à ds(a) pour éliminer un flux surnageant (b1) formé de contaminants et recueillir un flux décantant (b2) formé des fragments du premier matériau organique de synthèse usagé à recycler,
c) Une étape de séparation à densité élevée ds(c) qui est supérieure à ds(a) des composés du flux décantant (a2) au moyen d'un milieu aqueux dont la densité ds(c) est choisie au moins égale à la densité du matériau organique de synthèse présent dans ledit flux (a2), un flux surnageant (c1) étant formé du mélange des fragments du matériau organique de synthèse de densité ds(c) et de matériaux contaminants de densités comprises entre ds(a) et ds(c), et un flux décantant (c2) étant formé des matériaux contaminants de densité inférieure à ds(c) qui est éliminé,
d) Une étape de séparation à densité faible ds(d) du flux surnageant (c1) au moyen d'un milieu aqueux dont la densité ds(d) est choisie inférieure à ds(c), dont le flux surnageant (d1), est formé des matériaux contaminants de densités comprises entre ds(a) et ds(c), et est éliminé, et dont le flux décantant (d2) formé des fragments du matériau organique de synthèse usagé, homogène, de densité ds(d) est recueilli pour être valorisé.

2. Procédé selon la revendication 1, **caractérisé en ce que**, quand le flux de matériaux organiques de synthèse à valoriser a une densité inférieure à 1, le milieu aqueux de séparation est constitué d'eau et d'au moins un agent organique soluble dans l'eau ayant une densité inférieure à 1, comme par exemple un alcool mono ou polyhydroxylé, tels que le méthanol, l'éthanol, le propanol, le butanol, l'isobutanol, glycol, la quantité de cet agent étant contrôlée pour atteindre la valeur choisie comme seuil de séparation pour la densité « ds. ».

3. Procédé selon la revendication 1, **caractérisé en ce que** quand le flux de matériaux organiques de synthèse à valoriser a une densité supérieure ou égale à 1, le milieu aqueux de séparation est formé d'eau pour un seuil « ds0 » de séparation choisi exactement égal à 1, est constituée d'eau et de composés minéraux solubles dans l'eau tels que des sels minéraux et/ou de composés minéraux insolubles ou faiblement solubles dans l'eau de très faible dimension granulométrique tels que des argiles, du carbonate de calcium, mis en suspension dans l'eau, en quantité contrôlée pour atteindre la valeur choisie comme seuil de séparation pour la densité « ds. ».

4. Utilisation du procédé selon l'une quelconque des revendications 1 à 3 à la séparation d'au moins deux matériaux organiques de synthèse usagés, fragmentés et d'avec des matériaux contaminants les accompagnant, ces matériaux organiques de synthèse étant des polymères et/ou copolymères, chargés ou non, à valoriser, d'origine thermoplastique et/ou thermodure.

## Patentansprüche

1. Verfahren zum selektiven Trennen und gleichzeitigen Erhöhen der Reinheit von zwei gebrauchten, fragmentierten, organischen Synthesematerialien mit unterschiedlicher Dichte in einer Mischung miteinander und in einer Mischung mit zu entsorgenden verschiedenen kontaminierenden Materialien mit einer Dichte von kleiner oder größer als 1 mittels eines wässerigen dichten Milieus, von dem jedes wässerige Milieu eine als Trenn-Schwellenwert der genannten organischen und kontaminierenden Materialien ausgewählten Dichte "ds" hat, wobei die genannte Trennung zu zwei Flüssen führt, einem Überstand und dem anderen aus einem abgesetzten Material, wobei das genannte Verfahren **dadurch gekennzeichnet ist, dass** es umfasst:
a) eine Trennstufe mit hoher Dichte ds (a) der Mischung in zwei Flüssen, der eine ein Überstand (a1) und der andere aus abgesetztem Material (a2), mittels eines wässerigen Milieus, dessen Dichte ds(a) zwischen den Dichten des einen und des anderen organischen, zu trennenden Synthesematerials, bevorzugt nahe der Dichte des zu trennenden organischen Materials ausgewählt ist, das die geringste Dichte hat, um eine komplette Flotation zu gewährleisten,
b) eine Trennstufe mit geringer Dichte ds(b) der Bestandteile des überstehenden Flusses (a1) mittels eines wässerigen Milieus, dessen Dichte ds(b) kleiner als ds(a) gewählt ist, um einen aus Kontaminanten geformten überstehenden Fluss (b1) zu entsorgen und einen aus Fragmenten des ersten organischen, zu recycelnden, gebrauchten Synthesematerials geformten Flusses aus abgesetztem Material aufzufangen,
c) eine Trennstufe mit hoher Dichte ds(c), die höher ist als ds(a) der Bestandteile des Flusses aus abgesetztem Material (a2) mittels eines wässerigen Milieus, dessen Dichte ds(c) wenigstens gleich der Dichte des in dem genannten Fluss (a2) vorhandenen organischen Synthesematerials ist, wobei ein Fluss aus Überstand (c1) aus der Mischung der Fragmente des organischen Synthesematerials der Dichte ds(c) und kontaminierenden Materialien mit zwischen ds(a) und ds(c) inbegriffenen Dichten geformt ist, und ein Fluss aus abgesetztem Material (c2) aus kontaminierenden Materialien mit einer Dichte von unter ds(c) geformt ist, das entsorgt wird.
d) eine Trennstufe mit geringer Dichte ds(d) des Flusses aus Überstand (c1) mittels eines wässerigen Milieus, dessen Dichte ds(d) kleiner als ds(c) ausgewählt ist, dessen Fluss aus Überstand (d1) aus kontaminierenden Materialien mit zwischen ds(a) und ds(c) inbegriffenen Dichten geformt ist, und entsorgt ist und dessen Fluss aus abgesetztem Material(2), das aus den Fragmenten des gebrauchten, homogenen, organischen Synthesematerials ds(d) geformt ist, aufgefangen wird, um wiederverwendet zu werden.

2. Verfahren gemäß Anspruch 1, **dadurch gekennzeichnet, dass** der Strom aus zu valorisierenden organischen Synthesematerialien eine Dichte von unter 1 hat, das wässerige Trennmilieu aus Wasser und wenigstens einem in Wasser löslichem organischem Wirkstoff mit einer Dichte von unter 1 gebildet ist, wie z. B. einem mono- oder polyhydroxylierten Alkohol, wie z. B. Methanol, Ethanol, Propanol, Butanol, Isobutanol, Glykol, wobei die Menge dieses Wirkstoffs kontrolliert ist, um den als Trenn-Schwellenwert für die Dichte "ds" gewählten Wert zu erreichen.

3. Verfahren gemäß Anspruch 1, **dadurch gekennzeichnet, dass** der Fluss aus zu valorisierendem organischem Synthesematerial eine Dichte von größer als oder gleich 1 hat, das wässerige Trennmilieu für einen genau gleich 1 gewählten Trenn-Schwellenwert "ds0" aus Wasser und aus in Wasser löslichen mineralischen Bestandteilen geformt ist, wie z. B. Mineralsalzen und / oder in Wasser schwach löslichen oder nicht löslichen mineralischen Bestandteilen mit sehr geringer granulometrischer Abmessung, wie z. B. Tonerden, Kalziumkarbonat, das in kontrollierter Menge in Wasser suspendiert ist, um den als Trenn-Schwellenwert für die Dichte "ds" gewählten Wert zu erreichen.

4. Verwendung des Verfahrens gemäß Anspruch 1 bis 3 zur Trennung von wenigstens zwei gebrauchten, fragmentierten organischen Synthesematerialien und der sie begleitenden kontaminierenden Materialien, wobei diese organischen Synthesematerialien wiederzuverwertende Polymere und / oder Kopolymere thermoplastischen und / oder wärmeaushärtenden Ursprungs mit oder ohne Füllstoffe sind.

## Claims

1. A method for selectively separating and simultaneously increasing the purity of two fragmented used synthetic organic materials, having distinct densities, mixed together and mixed with various contaminating materials to be eliminated, having a density lower or higher than 1, using dense aqueous media, with each aqueous medium having a selected density "ds." as the separation threshold of said organic materials and contaminants, with said separation resulting in two flows, a supernatant one and another settling one, with said method being **characterized in that** it comprises:
a) A step of high density separation ds(a) of the mixture into two flows, a supernatant one (a1) and another settling one (a2) using an aqueous medium the density ds(a) of which is so selected as to be intermediate relative to the densities of one and the other synthetic organic materials to be separated, preferably close to the density of the organic material to be separated with the lowest density so as to ensure the complete flotation thereof,
b) A step of low density separation ds (b) of the compounds of the supernatant flow (a1) using an aqueous medium, the density ds(b) of which is so selected as to be lower than ds(a) in order to eliminate a supernatant flow (b1) consisting of contaminants and to collect a settling flow (b2) consisting of the fragments of the first used synthetic organic material to be recycled,
c) A step of high density separation ds(c) which is greater than ds(a) of the compounds of the settling flow (a2) using an aqueous medium, the density ds(c) of which is so selected as to be at least equal to the density of the synthetic organic material present in said flow (a2), with a supernatant flow (d) consisting of the mixture of the fragments of the synthetic organic material with a density ds(c) and contaminating materials having densities between ds(a) and ds(c), and with a settling flow (c2) consisting of the contaminating materials having a density lower than ds(c) which is eliminated,
d) A step of low density separation ds (d) of the supernatant flow (d) using an aqueous medium, the density ds (d) of which is so selected as to be lower than ds(c), the supernatant flow (d1) of which consists of the contaminating materials having densities between ds(a) and ds(c), and is eliminated, and the settling flow (d2) of which, consisting of the fragments of the homogeneous used synthetic organic material, having a density ds(d), is collected to be recovered.

2. A method according to claim 1, **characterized in that**, when the flow of synthetic organic materials to be recovered has a density lower than 1, the aqueous separation medium consists of water and at least one organic water soluble agent having a density lower than 1, such as a mono- or polyhydroxylated alcohol, such as methanol, ethanol, propanol, butanol, isobutanol, glycol, with the amount of such agent being controlled to reach the value selected to be the separation threshold for the density "ds.".

3. A method according to claim 1, **characterized in that**, when the flow of synthetic organic materials to be recovered has a density greater than or equal to 1, the separation aqueous medium consists of water for a separation threshold "ds0" so selected as to be exactly equal to 1, consists of water and water soluble inorganic compounds such as mineral salts and/or inorganic compounds insoluble or poorly soluble in water having a very small particle size such as clays, calcium carbonate, suspended in water, in a controlled amount so as to reach the value selected to be the separation threshold for the density "ds.".

4. The utilization of the method according to any one of claims 1 to 3, for separating at least two fragmented used synthetic organic materials, and same from the accompanying contaminating materials, with such synthetic organic materials being filled or not polymers and/or copolymers to be recovered, having a thermoplastic and/or thermoset origin.
